# EUROPÄISCHE PATENTSCHRIFT

(11) **EP 0 570 782 B1**
(45) Veröffentlichungstag und Bekanntmachung des Hinweises auf die Patenterteilung: **04.09.1996**
(21) Anmeldenummer: 93107440.5
(22) Anmeldetag: 07.05.1993
(51) Int. Cl.: C08L 33/06, C08L 33/12, C08K 5/00

(54) **Lichtstreuende Polymethacrylat-Formkörper mit hohen Temperatur- und Wetterechtheitswerten**
Light-scattering polymethacrylate mouldings with high temperature and weather resistance
Pièces moulées de polyméthacrylate diffusant la lumière à haute résistance à la chaleur et aux intempéries

(30) Priorität: 16.05.1992 DE 4216341
(43) Veröffentlichungstag der Anmeldung: 24.11.1993
(73) Patentinhaber: RÖHM GMBH, D-64293 Darmstadt (DE)
(72) Erfinder: Lichtenstein, Hans, W-6107 Reinheim (DE); Ebert, Silvia, W-63067 Offenbach (DE)

(56) Entgegenhaltungen:
- EP-A- 0 300 161
- FR-A- 2 212 345
- DATABASE WPI Week 8601, Derwent Publications Ltd., London, GB; AN 86-003633 & JP-A-60 229 749 (DENKI KAGAKU) 15. November 1985
- DATABASE WPI Week 8601, Derwent Publications Ltd., London, GB; AN 86-003633 & JP-A-60 229 749

## Beschreibung

### Gebiet der Erfindung

Die Erfindung betrifft mit vernetztem Polystyrol zur Lichtstreuung eingetrübte Polymethacrylat-Formkörper.

### Stand der Technik

Organische Gläser auf Methylmethacrylatbasis spielen in der Beleuchtungsindustrie und zur Herstellung von Lichtkuppeln eine bedeutende Rolle. Für eine gute Raumausleuchtung ist es notwendig, den die Lichtquellen umgebenden Leuchtenabdeckungen und auch den Lichtkuppeln Füllstoffe zuzugeben, die in dem Polymethylmethacrylatglas ungelöst sind, dieses dadurch trüben und so als Streumittel für Durchlicht wirken, aber die hohe Lichtdurchlässigkeit nicht wesentlich mindern.

Neben anorganischen Füllstoffen, wie insbesondere Bariumsulfat, hat sich Polystyrol mit dem Vorteil der höheren Streuwirkung als besonders geeigneter Streumittelzusatz bewährt. Wie in den deutschen Patentschriften DE-C 22 25 578 und DE-C 22 64 224 beschrieben, kann unvernetztes Polystyrol den zu polymerisierenden Monomeren, im wesentlichen Methylmethacrylat, zugesetzt werden. Das Polystyrol löst sich zunächst im Monomeren auf, scheidet sich aber mit fortschreitender Polymerisation in feinster und gleichmäßiger Verteilung wieder aus, da Polystyrol in Polymethylmethacrylat unlöslich ist und das System zwei Phasen aus zwei unverträglichen Polymeren bildet. Die Weiterverarbeitung solcher Polystyrol-getrübter Polymerisate, z.B. durch Spritzgießen oder Extrudieren, für die Herstellung von Formkörpern in großer Stückzahl, zeigte, daß dabei Qualitätsverluste in der Lichtstreuung und der Lichtdurchlässigkeit des getrübten Materials auftraten. Diese konnten auf Aggregatbildungen der Polystyrolteilchen und auf andere Löslichkeiten und Verteilungen des Polystyrols nach dessen Scherung bei der Verarbeitung in der Polymethylmethacrylatmatrix zurückgeführt werden.

Nachteile dieser Art können nach den Lehren der deutschen Patente DE-C 21 46 607 und DE-C 22 64 224 behoben werden, wenn als Mattierungs- bzw. Trübungsmittel vernetzte Polymerisate, die wesentlich aus Styrol aufgebaut sind, verwendet werden. Die vernetzten Polystyrole enthalten bis ca. 5 Gew.-% an Vernetzungsmittel. Nach der DE-C 22 25 578 lassen sich die Vorteile der vernetzt einzusetzenden Polymerisattrübungsmittel auch mit unvernetztem, in monomerem Methylmethacrylat löslichem Polystyrol erreichen, wenn es bei Temperaturen über 100 Grad C, d.h. bei Verarbeitung der organischen Gläser, zur Vernetzung reagierende Comonomereinheiten enthält.

Die US-Patente 4 876 311 und 5 004 785 beschreiben eingetrübte Kunststoffelemente, z.B. solche auf Methacrylatharz-Basis, wobei die Trübungsmittel vernetzte Perlen oder vernetzte feine Teilchen sind, die wesentlich mit aromatische Reste enthaltenden Monomeren, wie z.B. Styrol oder Phenylmethacrylat, und mit bis zu 20 Gew.-% Vernetzungsmittel aufgebaut sind.

Mit unvernetztem Polystyrol eingetrübtes Polymethacrylat, z.B. in Form von Polymethylmethacrylatplatten (PMMA), wie sie als Acrylglasplatten bekannt sind, hat gegenüber reinem, d.h. farblosem Polymethylmethacrylat andere Eigenschaften, vor allem andere optische Eigenschaften, wie die, auch angestrebte Lichtstreuung und einen erniedrigten Transmissionsgrad. In solcherart eingetrübtem PMMA erniedrigen sich durch Temperung und durch Licht- und Witterungseinflüsse die in Anlieferung vorhandenen Eigenschaften, wie Bestimmungen des Gelbwertes und des Transmissionsgrades zeigen. Dieses Verhalten von Polystyrol-(unvernetzt)-haltigem PMMA läßt sich auch durch Zusätze von UV-Schutzmitteln und Witterungsschutzmitteln nicht merklich beeinflussen.

### Aufgabe und Lösung

Es bestand weiter die Aufgabe auf Basis von Polystyrol eingetrübtes Polymethacrylat mit hohen Temperatur- und Wetterechtheitswerten bereitzustellen, das u.a. bei der thermischen Verformung zu lichtstreuenden Polymethacrylat-Formkörpern und bei deren Verwendung in der Beleuchtungstechnik, besonders bei deren Einsatz im Freien, seine hohen Echtheitswerte beibehält.

Überraschenderweise wurde gefunden, daß Polystyrol als lichtstreuende Teilchen enthaltende Polymethacrylat-Formkörper, hohe Temperatur- und Wetterechtheitswerte haben und beibehalten, wenn die Polymethacrylatmassen eine Kombination von vernetzten Polymerisatteilchen, aufgebaut aus Phenylgruppen-haltigen Monomeren, UV-Schutzmittel und Radikalfänger enthalten. Als vernetzte Polymerisatteilchen mit Phenylgruppen sind insbesondere vernetztes Polystyrol und vernetzte Polymere, die mit Phenylgruppen-haltigen Monomeren aufgebaut sind, verwendbar.

Die erfindungsgemäßen Polymethacrylatmassen und daraus hergestellte Formkörper können auch eingefärbt sein, wozu dafür vorgesehene und geeignete Farbstoffe bzw. Farbpigmente zugesetzt sind.

Die Erfindung betrifft:
Lichtstreuendes Polymethacrylatharz mit hohen Temperatur- und Wetterechtheitswerten, dessen Polymerisatmatrix aus mindestens 80 Gew.-% Methylmethacrylat aufgebaut ist, und das mit Farbstoffen bzw. Farbpigmenten eingefärbt sein kann,
dadurch gekennzeichnet,
daß es eine Kombination von
a) lichtstreuenden, vernetzten Polymerisatteilchen, die aus Phenylgruppen-haltigen Monomeren aufgebaut sind,
b) UV-Schutzmittel und
c) Radikalfänger
enthält.

### Durchführung der Erfindung

Lichtstreuende Polymerisatteilchen.

Phenylgruppen-haltige, vernetzte Polymerisatteilchen sind insbesondere mit 3 bis 30 Gew.-% polyfunktionellen Monomeren, vor allem Divinylbenzol, hergestelltes, vernetztes Polystyrol oder solche aus neben 3 bis 30 Gew.-% polyfunktionellen, vernetzenden Monomeren, wie z.B. Divinylbenzol oder Glykoldi(meth)acrylat, mit 50 bis 100 Gew.-% mindestens eines, eine Phenylgruppe-enthaltenden (Meth)acrylatmonomeren, wie z.B. Phenyl(meth)acrylat, Benzyl(meth)acrylat oder 2-Phenylethyl(meth)acrylat, erhaltenen Polymeren. Die Polymerisatteilchen haben bevorzugt eine Kugelform, d.h. die lichtstreuenden Teilchen werden vor allem als Perlpolymerisate in den erfindungsgemäßen Massen eingesetzt. Sie haben Partikeldurchmesser von 1 bis 20 µm.
Der Anteil der lichtstreuenden Teilchen beträgt in der Regel 0,05 bis 10 Gew.-%, vor allem 0,1 bis 5 Gew.-%, insbesondere 0,2 bis 3 Gew.-% bezogen auf die Gesamtheit aller Bestandteile des erfindungsgemäßen Polymethacrylatharzes.
Erfindungsgemäß einzusetzende Lichtstreumittel auf Basis Phenylgruppen-haltiger, vernetzter Polymerisate sind beispielsweise in der deutschen Offenlegungsschrift DE-A 35 28 165 beschrieben oder sind als Produkte auf dem Markt erhältlich. Von der Firma Sekisui Plastics Co., Ltd., Japan, ist feinteiliges vernetztes Polystyrol erhältlich, das in Perlform unter der Bezeichnung SBX, z.B. SBX-5, SBX-20, in Handel ist, wobei die mitangegebene Zahl die mittlere Teilchengröße in µm angibt. Diese sind als erfindungsgemäße Kombinationskomponenten einsetzbar.

### UV-Stabilisatoren und Radikalfänger

Zur dauerhaften Stabilisierung gegen thermischen Abbau und gegen Alterung, das sind Veränderungen der physikalischen und chemischen Eigenschaften, der mit Phenylgruppen-haltigen vernetzten Polymerisaten lichtstreuend eingestellten Polymethacrylatharzmassen, müssen diese erfindungsgemäß noch UV-absorbierende Lichtschutzmittel und als Radikalfänger wirkende, stabilisierende Stoffe enthalten. Wie aus der Tabelle 1 des experimentellen Teils ersichtlich, müssen überraschenderweise alle im kennzeichnenden Teil des Anspruchs genannten Komponenten mit mindestens einem Vertreter in der Polymethacrylatmasse vorhanden sein, um deren (hohe) Temperatur- und Wetterechtheitswerte, was durch den Gelbwert (DIN 6167) und den Transmissionsgrad (DIN 5033) ausgedrückt wird, bei entsprechender Beanspruchung nicht zu mindern.

Erfindungsgemäß enthaltene UV-Schutzmittel sind Derivate des Benzophenons, dessen Substituenten wie Hydroxyl- und/oder Alkoxygruppen sich meist in 2- und/oder 4-Stellung befinden. Hierzu zählen 2-Hydroxy-4-n-octoxybenzophenon, 2,4-Dihydroxybenzophenon, 2,2'-Dihydroxy-4-methoxybenzophenon, 2,2',4,4'-Tetrahydroxybenzophenon, 2,2'-Dihydroxy-4,4'-dimethoxybenzophenon, 2-Hydroxy-4-methoxybenzophenon. Desweiteren sind substituierte Benztriazole als erfindungsgemäßer UV-Schutz-Zusatz sehr geeignet, wozu vor allem 2-(2-Hydroxy-5-methylphenyl)-benztriazol, 2-[2-Hydroxy-3,5-di-(alpha,alpha-dimethyl-benzyl)-phenyl]benztriazol, 2-(2-Hydroxy-3,5-di-t-butylphenyl)benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol zählen.

Andere erfindungsgemäß einsetzbare UV-Schutzmittel sind 2-Cyano-3,3-diphenylacrylsäureethylester, 2-Ethoxy-2'-ethyloxalsäurebisanilid, 2-Ethoxy-5-t-butyl-2'-ethyloxalsäurebisanilid und substituierte Benzoesäurephenylester.

Die UV-Schutzmittel können als niedermolekulare Verbindungen, wie sie vorstehend angegeben sind, in den zu stabilisierenden Polymethacrylatmassen enthalten sein. Es können aber auch UV-absorbierende Gruppen in den Matrixpolymermolekülen kovalent nach Copolymerisation mit polymerisierbaren UV-Absorptionsverbindungen, wie z.B. Acryl-, Methacryl oder Allylderivaten von Benzophenon- oder Benztriazolderivaten, gebunden sein. Der Anteil von UV-Schutzmitteln, wobei dies auch Gemische chemisch verschiedener UV-Schutzmittel sein können, beträgt in der Regel 0,01 bis 1 Gew.-%, vor allem 0,01 bis 0,5 Gew.-%, insbesondere 0,02 bis 0,2 Gew.-% bezogen auf die Gesamtheit aller Bestandteile des erfindungsgemäßen Polymethacrylatharzes.

Die erfindungsgemäßen Polymethacrylatharze enthalten als Radikalfänger sterisch gehinderte Amine, die unter dem Namen HALS (Hindered Amine Light Stabilizer) bekannt sind und für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können. Beispiele für stabilisierend wirkende HALS-Verbindungen, die auch als Gemische eingesetzt werden können sind: Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-β-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

Angewendet werden die Radikalfänger in dem erfindungsgemäßen Polymethacrylatharz in Mengen von 0,01 bis 1,5 Gew.-%, vor allem in Mengen von 0,02 bis 1 Gew.-%, insbesondere in Mengen von 0,02 bis 0,5 Gew.-% bezogen auf die Gesamtheit aller Bestandteile.

Herstellung der lichtstreuenden Polymerisate mit hoher Temperatur- und Wetterechtheit.

Die Herstellung der erfindungsgemäßen Polymethacrylatharze setzt voraus, daß die Lichtstreumittel dem Matrixmaterial in einem Zustand zugesetzt werden können, in dem sie im Material mindestens annähernd noch homogen verteilbar sind. In der Regel wird man die Streumittel, die vorzugsweise in Perlform vorliegen, mit den beiden anderen Kombinationsadditiven, dem UV-Schutzmittel und dem Radikalfänger, dem Monomeren bzw. dem Präpolymerisat zufügen.
Die Polymerisation der Monomeren bzw. Präpolymerisate wird insbesondere, in an sich bekannter Weise, unter Verwendung formgebender Polymerisationskammern durchgeführt (vgl. Kunststoff-Handbuch, Herausg. R. Vieweg und F. Esser, Bd. IX, Polymethacrylate, Hanser München 1975, S. 15 - 22).

Die Erfindung ist in ihrer Anwendbarkeit nicht notwendig auf Acrylgläser beschränkt; sie richtet sich aber in erster Linie auf lichtstreuende temperatur- und wetterechte Polymethacrylat-Formkörper. Die Acrylgläser auf der Basis von Methylmethacrylat können noch Anteile von 0 bis etwa 45 Gew.-% an weiteren Comonomeren enthalten. Genannt seien andere Ester der Methacrylsäure bzw. Acrylsäure, wie z.B. der Acrylsäuremethylester, Acrylsäurebutylester, α-Chloracrylsäuremethylester, Ethylmethacrylat; weiter (gegebenenfalls substituierte) Amide der Acryl- bzw. Methacrylsäure, wie Acrylamid und Methacrylamid, Methylolmethacrylamid und -acrylamid. Ferner Acrylnitril, Styrol und Derivate desselben wie-Methylstyrol, Vinylester von Carbonsäuren, wie Vinylacetat u.ä. Besonders erwähnt sei die Anwesenheit von vernetzenden Monomeren, wie 1,4-Butandioldimethacrylat, Glykoldimethacrylat, Triglykoldimethacrylat, Trimethylolpropantrimethacrylat oder Allylverbindungen, wie z.B. Allylmethacrylat, Triallylcyanurat oder Triallylisocyanurat.

Häufig ist die Erfindung in Verbindung mit eingefärbtem Acrylglas anzuwenden, d.h. es müssen den Polymerisationsansätzen bzw. den Präpolymeren Farbmittel zugefügt werden. Die dafür geeigneten Farbstoffe bzw. Pigmente sind bekannt (vgl. Vieweg-Esser, Kunststoff-Handbuch, Band IX, "Polymethacrylate", C. Hanser Verlag 1975). Weiter können die Polymerisationsansätze noch an sich bekannte Hilfsstoffe, wie Weichmacher, Flammschutzmittel etc., enthalten.
Die geeigneten Konzentrationen für diese Zusätze lassen sich ebenfalls dem Stand der Technik entnehmen.

Die Herstellung der erfindungsgemäßen Polymermassen kann in enger Anlehnung an die Polymerisationsverfahren des Standes der Technik vorgenommen werden.
Beispielsweise können zunächst die Farbmittel mit Hilfe eines hochwirksamen Rührers in UV-Schutzmittel und/oder Radikalfänger enthaltendes Monomeres bzw. in ein Präpolymerisat, das UV- und/oder Radikalfänger-Additive enthalten kann, eingearbeitet werden, bis sich eine homogene Dispersion ergibt. Bei Verwendung eines Präpolymeren kann vorzugsweise zunächst eine Farbmitteldispersion, bzw. Pigmentpräparation dann die vorstehend beschriebenen Streumittel eingerührt und durch Rühren homogen verteilt werden. Anschließend wird in der üblichen Weise verfahren, z.B. evakuiert und in die Polymerisationskammern verfüllt. (Vgl. H. Rauch-Puntigam und Th. Völker in "Acryl- und Methacrylverbindungen", Springer-Verlag 1967).

Als Initiatoren für die Polymerisation der vorhandenen Monomeren, dem Methylmethacrylat und gegebenenfalls weiteren Monomeren wie z.B. Acrylmonomeren, Styrol und Derivate, Ester von Vinylverbindungen, können beispielsweise Peroxid- oder Azoverbindungen in den üblichen Mengen verwendet werden. Zur Steuerung des Molekulargewichtes eignen sich die bekannten Regler in den an sich bekannten Konzentrationen. Genannt seien z.B. organische Schwefelverbindungen. Polymerisationsgrad und damit das Molekulargewicht der entstehenden Polymerisate läßt sich bekanntlich durch die Initiatorkonzentration und/oder Reglerkonzentration einstellen. So wird man bei der Polymerisation von Acrylgläsern in der Regel 0,01 bis 1,0 Gew.-% an Initiator verwenden. Die Temperaturführung hat der entstehenden Polymerisationswärme Rechnung zu tragen und ist abhängig von der herzustellenden Plattendicke, d.h. es wird in der Regel in einer ersten Phase in einem Heizmedium (Wasserbad) bei geringerer Temperatur während längerer Zeit (ca. 3 bis 18 Stunden) polymerisiert und dann bei höherer Temperatur (etwa ca. 80 - ca. 120 Grad C) während kürzerer Zeit zu Ende polymerisiert (Temperung).

Bei Verwendung von Methylmethacrylat als Monomer, zusammen mit einem Präpolymerisat, kann man als erste Stufe der Polymerisation etwa 3 bis 10 Stunden bei einer Wasserbadtemperatur von 40 bis 60 Grad C, vorzugsweise ca. 45 Grad C, polymerisieren und anschließend etwa 2 bis 5 Stunden, vorzugsweise etwa 3 Stunden bei ca. 115 Grad C im Trockenschrank tempern.

Temperaturverhalten und Wetterechtheit wurden durch Ermittlung des Gelbwertes und des Transmissionsgrades der Proben nach Temperung derselben 30 Minuten bei 180 Grad C bzw. nach Xenotest ®-Prüfung ermittelt:
Gelbwert: DIN 6167, Lichtart D65/10^{o} Beobachter
Transmissionsgrad: DIN 5033, Lichtart D65/10^{o} Beobachter Xenotest ® nach DIN 53 387

Die erfindungsgemäßen, lichtstreuenden Polymethacrylatharze werden nach bekannten Methoden als thermoplastische Formmasse oder insbesondere als sogenanntes gegossenes, thermoelastisches Polymermaterial hergestellt. Aus der Formmasse, in der das Polymethacrylatharz mit Molekulargewichten im Bereich von 50 000 bis etwa 200 000 Dalton vorliegt, werden dann durch Spritzguß oder Extrusion Formkörper für die Beleuchtungstechnik erzeugt.
Das bevorzugte und meist in Plattenform hergestellte, gegossene Polymethacrylatharz, mit Molekulargewichten über 200 000 Dalton, insbesondere über 500 000 Dalton, vor allem im Bereich über 1 000 000 Dalton, wird durch thermische Umformungsverfahren, wie z.B. Biegen, Tiefziehen, in Beleuchtungskörper überführt.

### BEISPIELE

### Beispiel 1

Ansatz:
- 1000 Teile: präpolymeres Methylmethacrylat (Viskosität ca. 1000cP; die Viskosität des Präpolymeren ist mit einem Rotationsviskosimeter nach DIN 53 019 ermittelt),
- 1 Teil: 2,2'-Azobis-(isobutyronitril),
- 10 Teile: vernetzte Polystyrolperlen mit einem mittleren Teilchendurchmesser von 6 µm.

Der Ansatz wird intensiv gerührt, in eine mit 3 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine weiße, durchscheinende, stark lichtstreuende Acrylglasplatte erhalten.

### Beispiel 2

Wie Beispiel 1, jedoch werden dem Ansatz zusätzlich noch 0,5 Teile des UV-Absorbers 2-(2-Hydroxy-5-methylphenyl)-benztriazol zugegeben.

### Beispiel 3

Wie Beispiel 1, jedoch werden dem Ansatz zusätzlich noch 0,5 Teile des UV-Absorbers 2-(2-Hydroxy-5-methylphenyl)-benztriazol und 0,5 Teile des HALS-Produktes Bis-(2,2,6,6-tetramethyl-4-piperidyl)-sebacat zugegeben.

### Beispiel 4:

Ansatz:
- 1000 Teile: Methylmethacrylat
- 1 Teil: 2,2'-Azobis-(isobutyronitril)
- 10 Teile: eines Polystyrols mit dem mittleren Molekulargewicht von ca. 230 000 g/Mol (Das Molekulargewicht des Polystyrols ist mit einem HPLC-Gerät als SEC-Messung bestimmt)
- 0,5 Teile: 2-(2-Hydroxy-5-methylphenyl)-benztriazol

Der Ansatz wird intensiv gerührt bis sich das Polystyrol vollständig gelöst hat, in eine mit 3 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine weiße, durchscheinende, stark lichtstreuende Acrylglasplatte erhalten.

### Beispiel 5

Wie Beispiel 4, jedoch werden dem Ansatz zusätzlich noch 0,5 Teile des HALS-Produktes Bis-(2,2,6,6-tetramethyl-4-piperidyl)-sebacat zugegeben.

### Prüfungen zur Licht-/Wetterechtheit und Temperaturbeständigkeit

### Licht-/Wetterechtheit

5000 Stunden Xenotest nach DIN 53 387
Belichtung
- 102 Minuten-Trocken - bei ca. 65 % rel. Luftfeuchtigkeit
- 18 Minuten-Beregnung - bei etwa 90 - 100 % rel. Luftfeuchtigkeit und 40 - 55 Grad C.

### Temperaturbeständigkeit

Die Proben werden 30 Minuten bei einer Ofentemperatur von 180 Grad C erwärmt.

### Messung und Beurteilung

Die Messung des Transmissionsgrades erfolgt mit einem Spektralphotometer im Bereich von 380 - 780 nm nach DIN 5033.
Die Bestimmung des Gelbwertes erfolgt aus der Spektralmessung nach DIN 6167.

Anl.: Anlieferung

Die bei den Messungen erhaltenen Ergebnisse sind in der nachfolgenden Tabelle 1 zusammengestellt.

**TABELLE 1**

| *Produkt nach Beisp.* | *Gelbwert 30 min.180°C 5000 h* | | | *Transmissionsgrad 30 min. 180°C 5000 h* | | | *Δ ** |
|---|---|---|---|---|---|---|---|
| | *Anl.* | *Temperung* | *Xenotest* | *Anl.* | *Temperung* | *Xenotest* | |
| *1* | *8,64* | *9,57* | *9,78* | *80,0* | *78,4* | *72,2* | *7,8* |
| *2* | *8,67* | *9,09* | *9,13* | *79,7* | *79,2* | *74,1* | *5,6* |
| *3* | *8,59* | *8,65* | *8,62* | *80,0* | *80,1* | *79,8* | *0,2* |
| *4* | *10,02* | *21,03* | *9,43* | *78,0* | *65,6* | *73,5* | *4,5* |
| *5* | *10,72* | *19,24* | *10,54* | *76,8* | *65,10* | *73,5* | *3,3* |

| | | | | | | | |
|---|---|---|---|---|---|---|---|
| * Δ *Transmissionsverlust* = *Transmissionsgrad (Anlieferung)* *- Transmissionsgrad (5000 h Xenotest)* | | | | | | | |

## Patentansprüche

1. Lichtstreuendes Polymethacrylatharz mit hohen Temperatur- und Wetterechtheitswerten, dessen Polymerisatmatrix aus mindestens 80 Gew.-% Methylmethacrylat aufgebaut ist, und das mit Farbstoffen bzw. Farbpigmenten eingefärbt sein kann,
dadurch gekennzeichnet,
daß es eine Kombination von
a) lichtstreuenden, vernetzten Polymerisatteilchen, die aus Phenylgruppen-haltigen Monomeren aufgebaut sind,
b) UV-Schutzmittel und
c) Radikalfänger
enthält.

2. Lichtstreuendes Polymethacrylatharz nach Anspruch 1, dadurch gekennzeichnet, daß die in der erfindungsgemäßen Kombination verwendeten vernetzten Polymerisatteilchen, vernetzte Polystyrolteilchen in Perlform mit Teilchendurchmessern von 1 bis 20 µm sind.

3. Lichtstreuendes Polymethacrylatharz nach den Ansprüchen 1 und 2, dadurch gekennzeichnet, daß die in der erfindungsgemäßen Kombination verwendeten UV-Schutzmittel, UV-Absorber auf Basis von Benzophenon und/oder Benzotriazol sind.

4. Lichtstreuendes Polymethacrylatharz nach den Ansprüchen 1 bis 3, dadurch gekennzeichnet, daß die in der erfindungsgemäßen Kombination verwendeten Radikalfänger sterisch gehinderte Aminverbindungen mit Tetramethylpiperidingruppen sind.

5. Lichtstreuendes Polymethacrylatharz nach den Ansprüchen 1 bis 4, dadurch gekennzeichnet, daß es die lichtstreuenden, vernetzten, Phenylgruppehaltigen Polymerisatteilchen in Mengen von 0,05 bis 10 Gew.-%, die UV-Schutzmittel in Mengen von 0,01 bis 1 Gew.-% und die Radikalfänger in Mengen von 0,01 bis 1,5 Gew.-% enthält.

6. Lichtstreuendes Polymethacrylatharz nach den Ansprüchen 1 bis 5, dadurch gekennzeichnet, daß es mit Farbstoffen und/oder Farbpigmenten eingefärbt ist.

7. Lichtstreuendes Polymethacrylatharz nach den Ansprüchen 1 bis 6, dadurch gekennzeichnet, daß es eine thermoplastisch verarbeitbare Formmasse mit Molekulargewichten im Bereich von 50 000 bis etwa 200 000 Dalton ist.

8. Lichtstreuendes Polymethacrylatharz nach den Ansprüchen 1 bis 6, dadurch gekennzeichnet, daß es gegossenes, thermoelastisches Material mit Molekulargewichten von über 200 000 Dalton, insbesondere über 500 000 Dalton, vor allem über 1 000 000 Dalton ist.

9. Lichtstreuendes Polymethacrylatharz nach den Ansprüchen 1 bis 8, dadurch gekennzeichnet, daß es bei seiner Herstellung als Formkörper erhalten wird.

10. Verwendung von lichtstreuendem Polymethacrylatharz nach den Ansprüchen 1 bis 9, zur Herstellung von Formkörpern für die Beleuchtungstechnik.

## Claims

1. A light-scattering polymethacrylate resin having high temperature and weathering resistance, the polymer matrix of which is synthesised from at least 80 wt.% of methyl methacrylate, and which may be coloured with dyestuffs or pigments, characterised in that it comprises a combination of
a) light-scattering, cross-linked polymer particles synthesised from phenyl group-containing monomers,
b) ultraviolet protective agents and
c) radical inhibitors

2. A light-scattering polymethacrylate resin according to Claim 1, characterised in that the cross-linked polymer particles used in the combination according to the invention are cross-linked polystyrene particles in the form of beads with particle diameters of 1 to 20 µm.

3. A light-scattering polymethacrylate resin according to Claims 1 and 2, characterised in that the ultraviolet protective agents used in the combination according to the invention are ultraviolet absorbers based on benzophenone and/or benzotriazole.

4. A light-scattering polymethacrylate resin according to Claims 1 to 3, characterised in that the radical inhibitors used in the combination according to the invention are sterically hindered amine compounds comprising tetramethylpiperidine groups.

5. A light-scattering polymethacrylate resin according to Claims 1 to 4, characterised in that it comprises the light-scattering, cross-linked, phenyl group-containing polymer particles in amounts of 0.05 to 10 wt.%, the ultraviolet protective agents in amounts of 0.01 to 1 wt.%, and the radical inhibitors in amounts of 0.01 to 1.5 wt.%.

6. A light-scattering polymethacrylate resin according to Claims 1 to 5, characterised in that it is coloured with dyestuffs and/or pigments.

7. A light-scattering polymethacrylate resin according to Claims 1 to 6, characterised in that it is a thermoplastically processable moulding compound having molecular weights within the range of from 50,000 to about 200,000 Daltons.

8. A light-scattering polymethacrylate resin according to Claims 1 to 6, characterised in that it is a cast, thermoelastic material having molecular weights of more than 200,000 Daltons, more particularly more than 500,000 Daltons, especially more than 1,000,000 Daltons.

9. A light-scattering polymethacrylate resin according to Claims 1 to 8, characterised in that it is obtained as a moulded article during its manufacture.

10. Use of a light-scattering polymethacrylate resin according to Claims 1 to 9, in order to produce moulded articles for illumination technology.

## Revendications

1. Résine de polyméthacrylate diffusant la lumière, ayant des valeurs élevées de résistance à la chaleur et aux intempéries, dont la matrice de polymère est composée d'au moins 80% en poids de méthacrylate de méthyle et qui peut être teinte avec des matières colorantes ou des pigments colorés,
caractérisée en ce qu'elle contient une combinaison
a) de particules de polymère réticulées, diffusant la lumière, qui sont composées de monomères contenant des groupements phényle,
b) d'agents de protection contre l'UV et
c) de fixateurs de radicaux.

2. Résine de polyméthacrylate diffusant la lumière selon la revendication 1, caractérisée en ce que les particules de polymère réticulées utilisées dans la combinaison selon l'invention sont des particules de polystyrène réticulées sous forme de perles, ayant des diamètres de particules de 1 à 20 µm.

3. Résine de polyméthacrylate diffusant la lumière selon la revendication 1 ou 2, caractérisée en ce que les agents de protection contre l'UV utilisés dans la combinaison selon l'invention sont des absorbeurs d'UV à base de benzophénone et/ou de benzotriazole.

4. Résine de polyméthacrylate diffusant la lumière selon l'une quelconque des revendications 1 à 3, caractérisée en ce que les fixateurs de radicaux utilisés dans la combinaison selon l'invention sont des composés aminés empêchés stériquement, comportant des groupements tétraméthylpipéridine.

5. Résine de polyméthacrylate diffusant la lumière selon l'une quelconque des revendications 1 à 4, caractérisée en ce qu'elle contient les particules de polymère contenant des groupements phényle, réticulées et diffusant la lumière dans des proportions de 0,05 à 10% en poids, les agents de protection contre l'UV dans des proportions de 0,01 à 1% en poids et les fixateurs de radicaux dans des proportions de 0,01 à 1,5°% en poids.

6. Résine de polyméthacrylate diffusant la lumière selon l'une quelconque des revendications 1 à 5, caractérisée en ce qu'elle est teinte avec des matières colorantes et/ou des pigments colorés.

7. Résine de polyméthacrylate diffusant la lumière selon l'une quelconque des revendications 1 à 6, caractérisée en ce qu'elle est une masse à mouler ayant des poids moléculaires compris entre 50 000 et 200 000 daltons environ, susceptible d'être mise en oeuvre à l'état thermoplastique.

8. Résine de polyméthacrylate diffusant la lumière selon l'une quelconque des revendications 1 à 6, caractérisée en ce qu'elle est une matière thermoélastique coulée, ayant des poids moléculaires de plus de 200 000 daltons, en particulier de plus de 500 000 daltons et notamment de plus de 1 000 000 daltons.

9. Résine de polyméthacrylate diffusant la lumière selon l'une quelconque des revendications 1 à 8, caractérisée en ce qu'elle est obtenue sous forme de corps moulé lors de sa production.

10. Utilisation de résine de polyméthacrylate diffusant la lumière selon l'une quelconque des revendications 1 à 9 pour la fabrication de corps moulés pour la technique de l'éclairage.
